**Europäisches Patentamt**

**European Patent Office**

**Office européen des brevets**

(19)

(11) Publication number : **0 399 352 B1**

(12)

# EUROPEAN PATENT SPECIFICATION

(45) Date of publication of patent specification : **06.10.93 Bulletin 93/40**

(51) Int. Cl.⁵ : **C03B 37/083**

(21) Application number : **90109214.8**

(22) Date of filing : **16.05.90**

(54) **Novel reinforced glass fiber forming bushing and tips.**

(30) Priority : **26.05.89 US 357157**
**26.05.89 US 357160**

(43) Date of publication of application :
**28.11.90 Bulletin 90/48**

(45) Publication of the grant of the patent :
**06.10.93 Bulletin 93/40**

(84) Designated Contracting States :
**BE CH DE ES FR GB IT LI NL**

(56) References cited :
**GB-A- 947 183**
**US-A- 3 514 841**
**US-A- 3 685 978**
**US-A- 4 622 054**
**US-A- 4 636 234**
**US-A- 4 759 784**

(73) Proprietor : **PPG INDUSTRIES, INC.**
**One PPG Place**
**Pittsburgh Pennsylvania 15272 (US)**

(72) Inventor : **Jensen, Thomas Hulegaard**
**4221 Burnett Drive**
**Murrysville, PA 15668 (US)**

(74) Representative : **Sternagel, Hans-Günther, Dr. et al**
**Patentanwälte Dr. Michael Hann Dr. H.-G. Sternagel Sander Aue 30**
**D-51465 Bergisch Gladbach (DE)**

Jouve, 18, rue Saint-Denis, 75001 PARIS

## Description

The present invention relates to a novel bushing assembly having a plurality of unique nozzles or projecting orifices (hereinafter referred to as "tips") for the production of glass fibers. More particularly, the invention relates to a bushing for the production of round glass fibers from tips having cross sections in the form of polygons. Still more particularly, is an embodiment in which rows of square tips are arranged parallel to one another and linked together by an integrally formed rib to increase the bending stiffness of the tip plate and its resistance to high temperature thermal creep.

## Background of the Invention

In the forming of glass fibers utilizing modern technology, electrically-heated containers known as bushings, typically constructed of precious metals such as platinum or palladium and alloys thereof, are used. Molten glass is fed into the bushing and flows out through a multiplicity of tips carried on what is commonly referred to as a tip plate which typically forms the bottom of the bushing. The flow of glass through the tips is usually driven by the hydrostatic pressure exerted by the molten glass above the tip plate. In some cases, it may be desirable to pre-pressurize this hydrostatic head by applying a pressurized gas, such as air, above the glass.

Considerable quantities of heat are generated at the surface of a tip plate in a conventional fiber glass bushing. As the glass exits the tips, the same mechanisms which cool it, i.e., natural convection and enhanced radiative heat transfer due to the presence of fin coolers, will also partially remove some of the heat associated with the tip plate. Nevertheless, the tip plate must still be capable of withstanding temperatures well in excess of 1093.3°C (2,000°F) while maintaining its structural integrity. The hydrostatic head mentioned above, which is relied upon to maintain the driving force for the flow of glass through the tips, also exerts a continuous load on the tip plate. At the high temperatures used in forming, this load will eventually lead to thermal creep and can result in a severe sag in the surface of the tip plate. This normally limits the useful life of the bushing.

Another difficulty encountered in the use of platinum alloys for the construction of tip plates is that the wetting angle of the glass on the particular alloy may be such that molten glass tends to adhere or wet the exterior surface of the tip. Wetting may take place to the extent that the glass exiting as a stream from one tip spreads and merges with an adjacent one. This renders further attenuation impossible and the glass must be cleaned from the tip plate so that the process can be restarted. In commercial production, these interruptions are referred to as "breakouts" and their frequency of occurrence must be kept to a minimum in order to maintain a high process efficiency.

In recent years, the size of production bushings has increased to the point where tip plates carrying as many as 1,200, 1,800 and even 4,000 or more tips are commonplace. Unfortunately, the deformation associated with thermal creep and wetting which leads to the breakout problems discussed above have also become more acute. Grain stabilized platinum alloys have been developed to help resist creep and there are indications that the addition of small amounts of iridium or ruthenium to conventional precious metal alloys may also improve the strength of the tip plate.

Furthermore, since a considerable investment in costly precious metals is required to construct a bushing, it would be advantageous to fabricate as many tips per square cm. that can be feasibly accommodated on the tip plate to reduce the quantity of precious metals used while, at the same time, minimizing the problems associated with sag due to creep. This number of tips or orifices per square cm. described here will hereinafter be referred to as the "packing density" of the tip plate.

The prior art teaches one method for lowering the quantity of precious metals used in bushing construction by eliminating the tips entirely and replacing them with a flat perforated plate having a large number of holes or orifices to accommodate the flow of glass. Unfortunately, as the packing density of the orifices increases, both the effective elastic and plastic constants of the plate are reduced so that the same hydrostatic head produces even greater deformation than would be observed in a conventional tip plate of the same size.

Another major drawback with this design is that the glass has a strong tendency to wet the bottom of the plate. In order to overcome this, intersecting grooves may be cut between the orifices at right angles to one another. This restricts the movement of glass across the undersurface of the plate and thereby prevents the merger of glass issuing from one orifice with that of another.

In bushings that employ tips as orifices, one is physically limited by the wall thickness of the tips to a theoretical maximum packing density which is often greater than that which can be realized in practice. This is because a limiting threshold is reached as the pitch or spacing between the tips is made smaller and smaller at which point a breakout at one tip may allow molten glass to spread or flood across the surface of the tip plate and interrupt the process. Conically shaped or tapered tips have been developed to overcome this difficulty since the area wetted by the glass flowing from each tip is theoretically limited to the bottom surface thereof. But, even when these tips are spaced too closely to one another, glass may flow into the recesses between them by capillary action and again cause a disruption of the forming process.

Nevertheless, it has always been the usual practice of the industry to fabricate individual tips in the form of round conical cylinders having circular cross sections. Examples are disclosed in the book entitled "The Manufacturing Technology of Continuous Glass Fibers" by K. L. Lowenstein, published by the Elsevier Scientific Publishing Company, New York, 1973 at pages 94-95. It has also been observed in both the patent and scientific literature that the production of round fibers is usually illustrated as originating from tips having a round cross section.

Up until now, noncircular tips have been employed only when it was desired to produce fibers having noncircular cross sections. For example, U S -A- 4,636,234 discloses a tip plate containing trilobal orifices for the production of similarly shaped fibers. U S -A- 4,622,054 and 4,759,784 both disclose other shapes and methods of production. These references also teach that in order to accomplish the production of the noncircular fibers, extremely high bushing pre-pressures must be used in order to force the glass through the tips. Also, a rapid quenching of the glass must occur before its surface tension tends to coalesce it into a fiber having a round cross section.

Thus it is an object of the invention to minimize the problems associated with heat removal and with flooding.

This object is attained by a bushing for the production of glass fibers comprising sidewalls, an open top, and a bottom tip plate, further having a plurality of hollow tips arranged thereon in groups of parallel rows to accommodate the flow of a molten glass, said tips projecting downwardly in the direction of flow, the bottom edge of each tip being substantially parallel to the bottom of the bushing characterized in that the cross-section of each tip has the shape of a regular or irregular polygon having between three and eight sides.

A preferred embodiment additionally having the advantage of minimizing problems associated with thermal creep is additionally characterized in that the bottom tip plate has a plurality of raised ribs crossing its width and the plurality of hollow tips is integrally formed with the ribs, the ribs and tips being substantially parallel to one another and arranged in groups of at least two, each group being set off from every other group along the length of the tip plate.

In accordance with this preferred embodiment of the instant invention, a fiber glass bushing having a plurality of tips interconnected by, and integrally formed with, a plurality of reinforcing ribs is disclosed. The ribs run parallel to the width of the tip plate and structurally incorporate the individual tips thereof, thereby increasing the bending stiffness and resistance to high temperature thermal creep. The tips are, according to the invention, in the form of substantially regular or irregular polygons having between three and eight sides. These include the shapes of triangles, squares, pentagons, hexagons, heptagons, and octagons. Also contemplated are tips having irregular polygonal cross sections such as right triangles and rhomboids. As molten glass emerges from tips having one of these shapes, the glass is of a sufficiently low viscosity that its surface tension will tend to pull each stream of molten glass into a substantially circular cross section. Nonuniformities in the roundness of the fiber will thus tend to be corrected by the surface tension prior to the cooling and solidification of the molten glass.

While this physical phenomenon of coalescence of glass has long been known in the art and methods such as those discussed above have been developed to avoid it, it has never been apparent to exploit this behavior to produce round fibers from a noncircular tip. As it will be shown from the remainder of the disclosure, several advantages can be gained by doing so.

The preferred embodiment of the instant invention can additionally result in a tip plat having increased strength which resists thermal creep deformation longer than a tip plate having a conventional design.

Therefore it is an advantage of this invention that non-circular tips can be used in order to increase the pakking density of tips present on the tip plate of a fiber glass bushing assembly.

It is a further advantage of the preferred embodiment of this invention that the tip plate of a fiber glass bushing is strengthened in order to resist deformation caused by thermal creep at elevated temperatures.

It is yet a further advantage of the preferred embodiment of this invention that the packing density of tips present on the tip plate of a fiber glass bushing assembly and the amount of glass flow or throughput per unit surface area while maintaining or improving the structural integrity of the plate is increased.

Brief Description of the Drawings

Figure 1 is a general schematic of a conventional fiber glass forming process showing a bushing, an applicator and a winder.

Figure 2 is a perspective view of a bushing, its associated fin coolers, individual tips and fibers emerging therefrom.

Figure 3 is a front elevational view of a typical 800 tip production bushing.

Figure 4 is a top plan view of the bushing of Figure 3 taken along line 4-4.

Figure 5 is a perspective view of various noncircular tips which can be used to produce round fibers.

Figure 6 is a bottom plan view of a tip plate having square tips arranged in their most preferred orientation.

Figure 7 is a cross-sectional view of adjacent tips taken along line 7-7 of Figure 6.

Figure 8 is a cross-sectional view of adjacent tips taken along line 8-8 of Figure 6.

Figure 9 is an enlarged perspective view of a bottom section of the tip plate shown in Figure 6.

Figure 10 is an enlarged perspective view of the same tip plate illustrated in Figure 9 but showing the use of square tips reinforced with an integrally formed rib.

Figure 11 is a bottom plan view of the tip plate illustrated in Figure 10 showing the rib stiffeners and square tips arranged in their most preferred orientation.

Figure 12 is a cross sectional view of adjacent tips taken along line 12-12 of Figure 11.

Figure 13 is a cross sectional view of the tips taken along line 13-13 of Figure 11.

Figure 14 is a cross sectional view of two tips taken along line 14-14 of Figure 11.

Detailed Description of the Invention

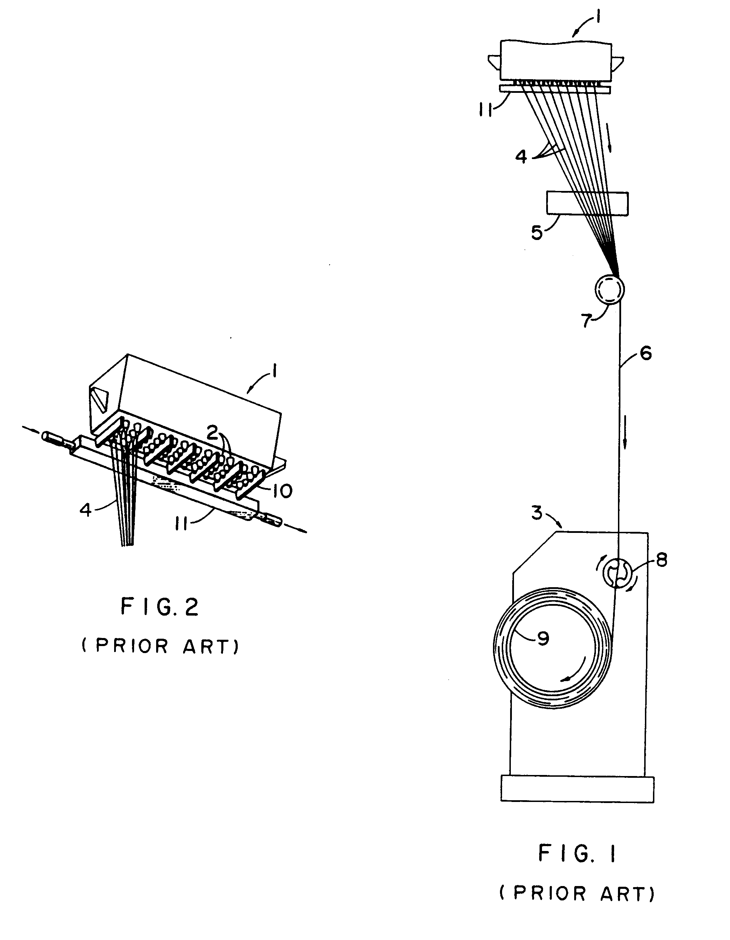

With reference to the drawings, Figures 1 and 2 illustrate a conventional continuous direct draw process for the production of glass fibers wherein molten glass is fed into the top of a bushing assembly (1) and exits from a plurality of tips (2) to form individual glass cones which are then cooled and attenuated by means of a winder (3) into individual glass fibers (4). The individual fibers (4) are brought in contact with an applicator (5) and coated with a chemical size or binder. The fibers (4) are then gathered into a single strand (6) by a gathering shoe (7), normally in the form of a wheel having a grooved rim. The strand (6) is then wound over a rotating spiral (8) and onto a cardboard forming tube (9) which is rotated by an appropriately powered winder (3). The winder may cause either the forming tube (9), spiral (8) or both to reciprocate back and forth along their axis of rotation so that the strand (6) passing over the spiral (8) is laid down along the length of the forming tube (9). Cooling fins (10) are inserted between adjacent rows of tips (2) with one end of each fin being attached to a manifold (11) through which a cooling fluid, such as water, is pumped. The fins (10) are positioned so as to absorb radiative heat from the individual glass cones and conduct it to the manifold (11) where it is removed by the cooling fluid. The fins also remove some heat radiated by the tip plate (13).

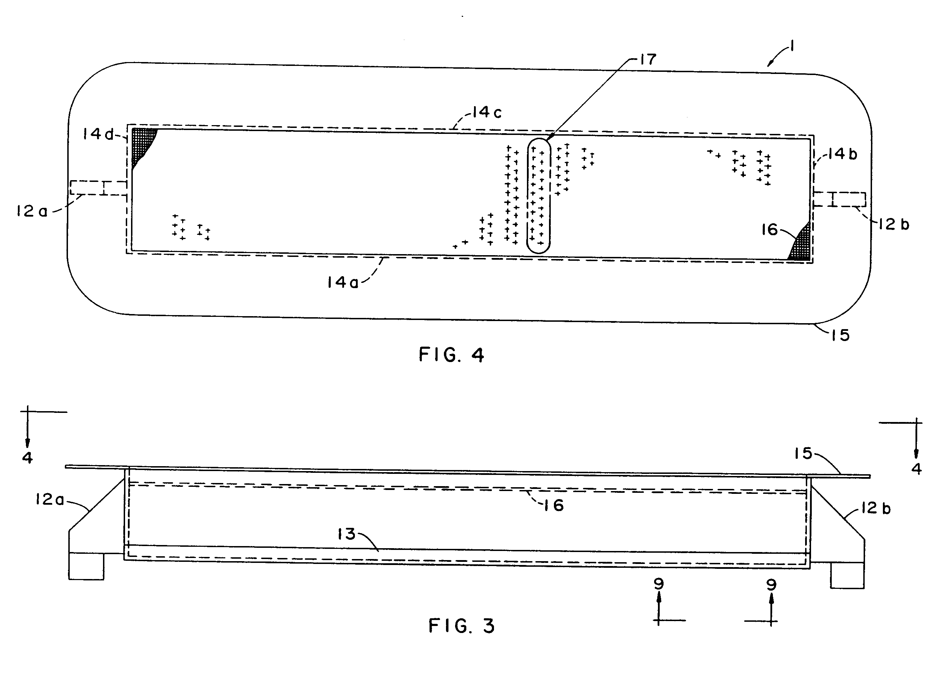

Figures 3 and 4 present an elevational and top plan view respectively of a typical bushing (1). The top of the bushing (1) is brought in contact with a glass supply source. The supply source may be the forehearth of a direct melt furnace in which glass flows directly along the length of the forehearth and into the bushing. Lowenstein, supra, at pages 61-66, describes a typical fiber glass direct melt forehearth system and shows several configurations of forehearths with bushings attached thereto. Specifically at page 66, the author shows the attachment of a bushing to a typical forehearth. In the same book at pages 89-100, typical fiber glass bushings and their relation to the fiber drawing process are described. An alternative supply system, which may also be used, is one in which glass is supplied in the form of solid marbles to a special bushing. The marbles are then melted directly inside the bushing and the resulting glass fed through a plurality of tips located on its bottom. A bushing of this type is shown in Lowenstein, supra, at pages 102-104.

Two ears or terminals (12a and 12b) are provided for passing an electrical current through the bushing assembly (1) in order to heat it and the tip plate (13). The bushing has four sidewalls (14a, b, c and d) suspended from a flange (15) and attached to the tip plate (13) at their other extremity typically by welding. The bushing (1) has an open top so that the sidewalls and tip plate form a cavity to accommodate molten glass flowing from the forehearth or upper part of a marble melt bushing as described above. A screen (16) may also be provided in order to prevent any small particulate debris carried in the glass from reaching the tip plate (13) although bushings without screens may also be used.

The tip plate (13) carries a plurality of tips (2) arranged in groups (17) of at least two rows parallel to each other and the minor axis of the tip plate. These groups (17) are usually separated by a space wide enough to accommodate the insertion of an individual fin (10) carried by the manifold (11). (Both the fins (10) and their associated manifold (11) are collectively referred to as fin coolers by those skilled in the art.)

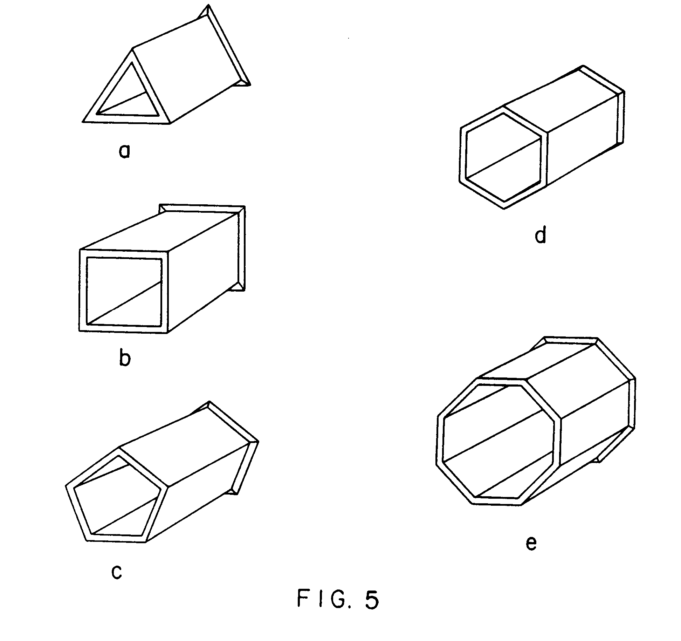

With reference to Figure 5, some of the individual tips (2) contemplated by the instant invention for the production of circular glass fibers are shown in perspective. For example, an equilateral triangle (5a), a square (5b), a pentagon (5c), a hexagon (5d), and an octagon (5e) are all forms of regular polygons having sides of equal length. It is a property of regular polygons that they may be circumscribed by a circle that touches each vertex of the polygon. Although regular polygons are preferred, this does not mean that this invention neglects to contemplate the use of irregular polygonal shapes as well. For example, a tip having a cross section in the shape of a right triangle is envisioned as well as an equilateral one. A tip having four sides of equal or unequal length and formed in the shape of a parallelogram or rhombus, as well as a square tip, is similarly contemplated.

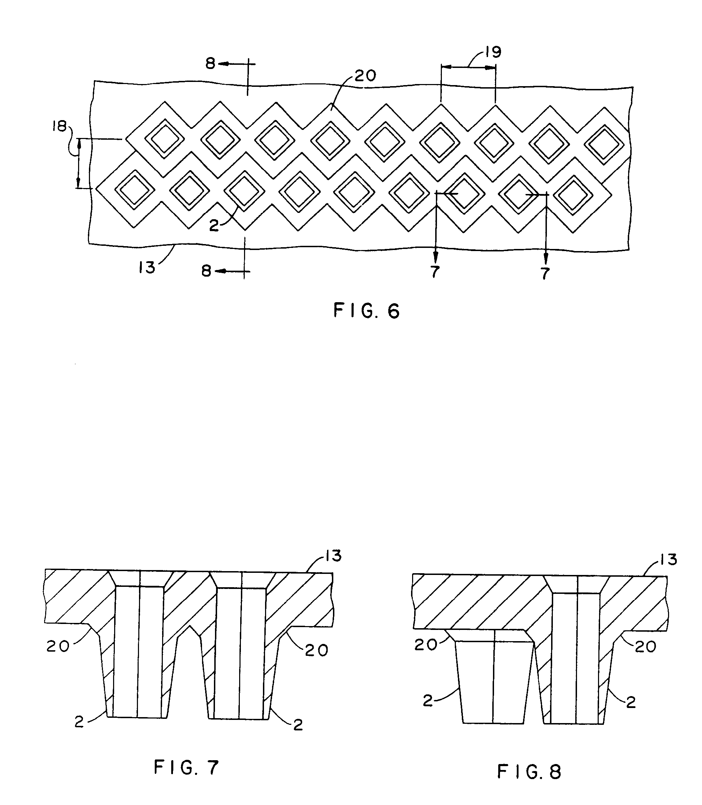

In the practice of the instant invention, the square tip of Figure 5b is the most preferred embodiment and in Figure 6, these tips are shown in their most preferred orientation. The tips are oriented in such a fashion that their diagonals lie parallel to the major and minor axis of the tip plate (13) and tips in adjacent rows are staggered with respect to one another. This arrangement minimizes the pitch (18) between adjacent rows as well as the pitch (19) between adjacent tips in the same row.

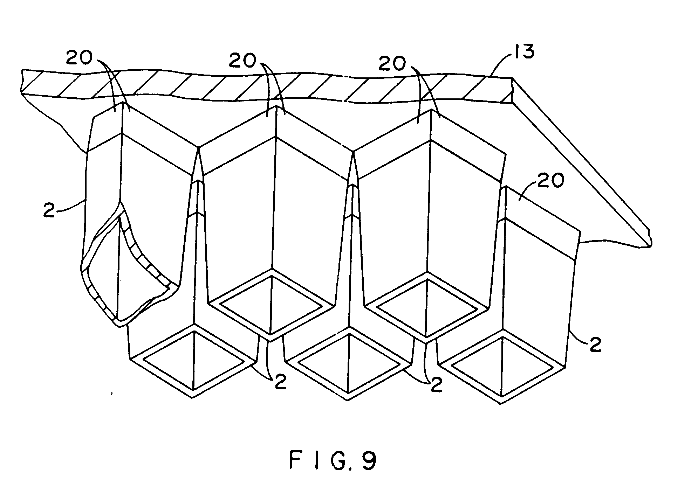

Figure 7 presents a cross-sectional view of two tips adjacent to one another in the same row as taken along line 7-7 of Figure 6. The tips (2) are integrally formed with the tip plate (13) by the cold draw or coining process as described in Lowenstein, supra, at pages 95-97 although the other techniques described therein may be used as well. A shoulder (20) near the base of each tip (2) is also usually formed as a result of the cold drawing process. Figure 8 presents a cross-sectional view of the tips taken along line 8-8 in Figure 6. Figure 9 better illustrates the relationship of the tips (2) by providing a perspective view of them as they would be seen looking from below the tip plate and generally into line 9-9 of Figure 3.

Bushings, as previously described, are constructed from precious metals such as platinum, rhodium, palladium and alloys thereof. A typical alloy that has been widely used contains approximately 80 percent platinum and 20 percent rhodium on a weight basis. Sometimes, grain stabilized platinum and grain stabilized platinum alloys have been employed where strength and creep resistance are primary design criteria. Other alloys have included platinum and platinum-rhodium alloys containing small amounts of iridium or ruthenium to also increase strength. Gold has also been occasionally used to locally alter the wetting characteristics of the glass.

In the manufacture of a conventional tip plate, a sheet of suitable precious metal alloy, along with a die, are first put through an appropriate rolling mill. As the sheet is compressed, the die produces a sequence of indentations at each location where a tip is to be formed. In the next step, a hydraulic punch press and a male die are used to push a series of pins through the tip plate material and into the female die. The metal alloy is plastically deformed and flows into the gap between the pins and the die whereby the walls of the tip (2) and its base shoulder or fillet (20) are formed. This cold drawing or coining process is more fully described by Lowenstein, supra, at pages 95-97.

In the case of the preferred embodiment of the instant invention, reinforcing ribs are formed during the initial rolling operation described above. The only difference is that the rolling die is modified so that the rib will be formed at the same time the indentations used to locate the tips are made. The remainder of the operation is the same with the exception that the female die used in the punch press operation is modified to accommodate the raised ribs of the tip plate.

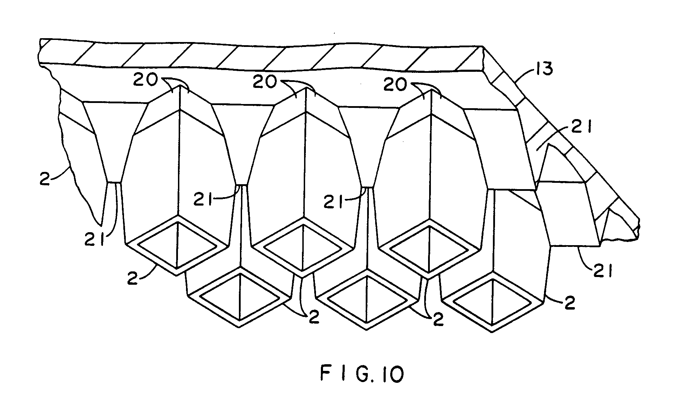

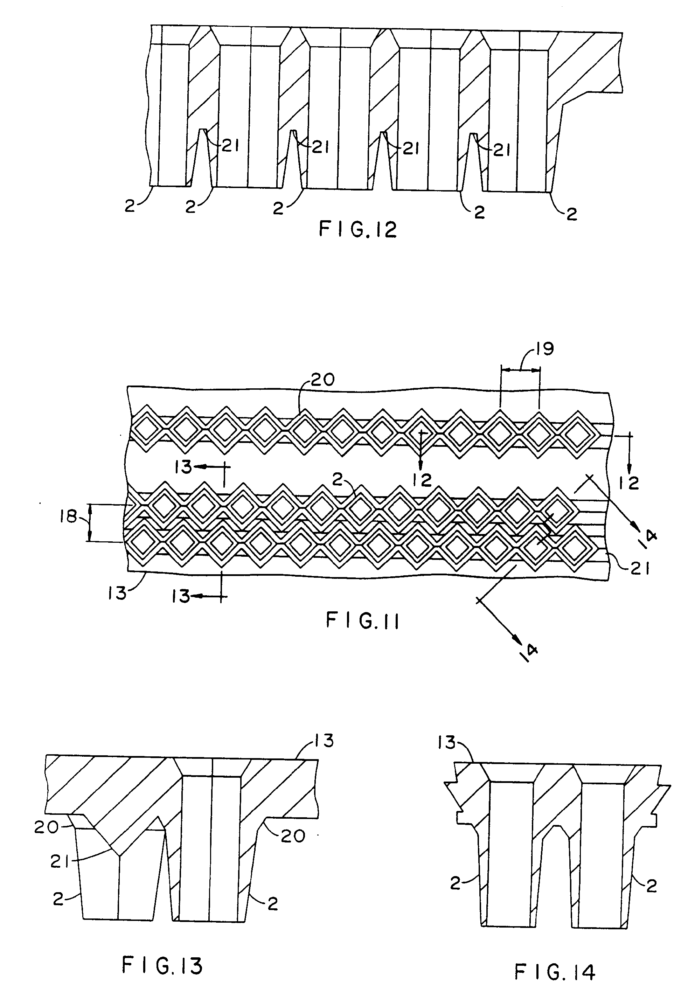

The rib (21) is preferably triangular in its cross section as illustrated in Figures 10 and 13 although other cross sections are possible. The base of the rib is generally slightly less than the widest dimension of the shoulder (20) of the tip but may also be slightly greater depending upon the actual dimensions of the dies used in the manufacturing process. The height of the rib extends from the surface of the tip plate anywhere up to a distance slightly below the tip exit.

Figure 10 better illustrates the relationship of the tips (2) and the rib structure (21) by providing a perspective view of them as they would be seen from below the tip plate.

In the practice of the instant invention, the use of a square tip is the most preferred embodiment The reasons for the preference of square tips will be more fully described below.

Figure 11 is a bottom plan view of a tip plate having square tips arranged in their most preferred orientation along with the rib (21) structure described above. The tips are oriented in the same fashion as those of Figure 6 so that the pitch (18) between adjacent rows as well as the pitch (19) between adjacent tips in the same row is minimized.

Figure 12 presents a cross sectional view of two tips adjacent to one another in the same row as taken along line 12-12 of Figure 11. As mentioned previously, a shoulder (20) near the base of each tip (2) usually results from the cold drawing process used to form the tip.

Figure 13 presents a cross sectional view of two tips taken along line 13-13 in Figure 11. Here, the effect of the rib (21) is more clearly visible. Although the rib increases the bending moment of inertia and stiffness of the tip plate, it also allows the bending stresses to be more evenly distributed over a greater cross sectional area thereby resulting in a lower stress intensity and creep rate than would otherwise be present.

Figure 14 presents a cross-sectional view of the tips taken along line 14-14 of Figure 11.

In the operation of a bushing, as molten glass issues from each tip into the atmosphere, the stream will neck down to form a cone-like body of glass from which the fiber is eventually drawn. The degree of necking is determined by the viscosity of the glass which is highly temperature dependent. The tensile forces present in the cone due to the attenuation process are strongly related to the viscosity. Surface tension also contributes to the transfer of forces over the periphery of the cone.

Noncircular tips of the type described herein can be used to produce round fibers because near the tip exit, where the emerging glass has a very low viscosity, the surface tension will constrict the surface of the glass and cause it to assume a circular cross section even though the glass initially issues with substantially the same cross section as the tip. These surface tension forces may be so strong as to actually cause glass issued at a very high temperature to coalesce into beads or droplets rather than flow in a continuous stream. At lower temperatures, the behavior of the stream is largely dominated by the increased viscosity so that surface tension effects are insignificant by comparison. This is the reason it is necessary to rapidly quench glass issuing from a noncircular tip to "freeze" its shape by rapidly increasing the viscosity before the surface tension has time to coalesce it when the production of a noncircular fiber is desired.

It is also believed that the use of noncircular tips helps to benefit the stability of the forming process and reduce the frequency of breakouts as well as any tendency of the tip plate to flood. In the immediate vicinity of the tip, the irregular surface of the stream as it exits into the surrounding atmosphere will provide an enhanced but localized area for convective and radiative heat transfer that would not be present if the cross section of the stream were circular. This localized cooling results in stringers or ribbons of glass having a slightly higher viscosity than the rest of the stream. It is believed that this effect helps stabilize the cone and formation of the fiber while the stream is coalesced by the surface tension.

An overall increase in cooling also occurs because of the increased surface-to-volume ratio of the glass cone immediately adjacent to the tip. Assuming that the glass emerges with substantially the same cross section as the tip, it is a simple matter to calculate both the perimeter and cross-sectional area near the tip exit by the use of readily available formulas. It can be shown that the ratio of the perimeter and cross-sectional area is equivalent to the surface-to-volume ratio of a section of the glass cone. A large surface-to-volume ratio implies that more surface area of the stream is exposed and available for cooling than in a stream exiting from a tip with a lower surface-to-volume ratio. Glass exiting a round tip has the smallest surface-to-volume ratio and is, therefore, the most inefficiently cooled. This will become apparent from the remainder of the disclosure.

The use of a noncircular tip in the form of substantially regular finite-sided polygons or irregular variations thereof also results in the instant invention's success in increasing the packing density of the tips and thus better utilizing the available surface area of the tip plate while an integrally formed rib structure as described herein increases the bending stiffness of the tip plate and thereby reduces the effect of thermal creep deformation.

Since the best arrangement for bringing tips, or any other round objects, in closest contact with one another, in order to minimize the interstitial area between them, is to pack them in a staggered fashion so that a line connecting their centers forms an equilateral triangle. This triangle will fully enclose an area equal to one-half of the circular cross section of the tip plus an unoccupied interstitial area. Given a tip of outside diameter D and assuming that the effect of the shoulder (20) and finite wall thickness can be neglected, the interstitial area is equal to the difference between the cross-sectional area of the aforementioned equilateral triangle $\sqrt{3}\ D^2/4$) and one-half the cross-sectional area of the tip. When expressed as a percentage of the total cross-sectional area contained within the triangle, this unoccupied area amounts to 52 percent of the total. If the tips were square or in the form of some other regular polygon, this wasted area would be eliminated entirely because the tips could be theoretically arranged to be in perfect contact with one another.

The use of noncircular tips described in the instant invention also increases the tip packing density because of the manner in which they are sized in relation to a circular tip. The sizing is accomplished by determining the characteristic dimension of the noncircular tip so as to yield the same internal cross-sectional area as would be provided by a circular tip having an inside diameter D. For example, in the case of a square having four sides of equal length L, the same flow area of $\pi D^2/4$ that would be provided by a circular tip would also be present in the square one if L were equal to $\sqrt{\pi}D/2$ or approximately 0.886 D. It is a simple matter to size the dimensions of other tips having cross sections in the form of regular polygons through the use of the formula:

$$L = (\pi\tan(180/N)/N)^{\frac{1}{2}}D$$

where D is the inside diameter of a round tip, N is the number of sides of a polygon having an equivalent cross-sectional area, and L is the length of each side.

Table I presents the ratio L/D obtained using the above equation, the perimeter ratio of the polygon to that of a circle (this reflects the increased surface area available for heat transfer), and the surface-to-volume ratio discussed previously multiplied by the diameter of a reference circle D in order to nondimensionalize the result.

## TABLE I

| Number of Sides | Shape | L/D | Perimeter Ratio | Surface-to-Volume Ratio |
|---|---|---|---|---|
| 3 | Triangle | 1.347 | 1.286 | 5.144 |
| 4 | Square | .886 | 1.128 | 4.512 |
| 5 | Pentagon | .676 | 1.075 | 4.300 |
| 6 | Hexagon | .550 | 1.050 | 4.200 |
| 7 | Heptagon | .465 | 1.036 | 4.144 |
| 8 | Octagon | .403 | 1.027 | 4.108 |
| $\infty$ | Circle | -- | 1.000 | 4.000 |

It becomes apparent that as the number of sides of the polygon increase, its perimeter approaches that of the circle. Note, however, that a tip sized in the shape of an equilateral triangle has 28.6 percent more exposed surface area available for heat transfer than a round one. Therefore, it would appear that a triangular tip is superior to a round one. But, this is not the preferred embodiment of the instant invention because the maximum packing density can only be realized with a tip having a square cross section. This becomes more apparent upon realizing that a tip in the form of a right 45° triangle is nothing more than a square divided in two or that a hexagon is nothing more than a collection of six equilateral triangles.

The improvement in tip packing densities that can be achieved using a square tip becomes more apparent by comparing the merits of round vs. square tips by way of an example. Assume each tip has a length of 3 mm (0.120 inches) as measured from the tip plate to the tip exit. Furthermore, assume that each tip has a uniform wall thickness on the order of 0,25 mm (0.010 inches). In practice, the wall thickness will usually be tapered from top to bottom in order to prevent the glass from flooding as was previously discussed in regard to conically shaped tips. A round tip having an inside diameter of 1,9 mm (0.075 inches) has a cross-sectional area on the order of 2.85 mm$^2$(4.42x10$^{-3}$in$^2$)to accommodate the flow of glass and an inner perimeter of about 6,1 mm (0.24 inches). The ratio of the perimeter to the cross-sectional area, or surface-to-volume ratio, is on the order of 2.09 mm$^{-1}$(53 in$^{-1}$). This same cross-sectional area can be provided by a square tip having an inside dimension equal to 0.886 x 1,9 mm (0.075) or roughly 1,68 mm (0.0665 inches.) The perimeter will equal four times this dimension or 6.75 mm (.266 in). The surface-to-volume ratio in this case is roughly 2.36 mm$^{-1}$ (60 in$^{-1}$)

Taking into account the wall thickness, a round tip can be inscribed within a square having a side dimension of 2.41 mm (0.095 inches) and thus occupies an area of about 5,81 mm$^2$(9 x 10$^{-3}$ in$^2$). The reciprocal of this number is the packing density which in this case is approximately 18 tips per cm$^2$ (110 tips per square inch). The square tip which provides the same cross-sectional area occupies a square having a side dimension of only 2.2 mm (0.0865 inches) and cross-sectional area of 4.83 mm$^2$ (7.48 x 10$^{-3}$ in$^2$). This yields a packing density of roughly 21 tips per cm$^2$ (133 tips per square inch). These calculations show that the same volumetric flow rate can be achieved using roughly 16.8 percent less total surface area per tip than could be had by employing tips of a conventional circular geometry.

While this invention has been described with reference to certain embodiments in the specification it is not intended that it be limited thereto except as recited by the accompanying claims. All of the preceding examples have been included for illustrative purposes only and are not intended to limit the scope of the invention.

## Claims

1. A bushing (1) for the production of glass fibers comprising sidewalls (14a, b, c, d), an open top, and a bottom tip plate (13), further having a plurality of hollow tips (2) arranged thereon in groups of parallel rows to accommodate the flow of a molten glass, said tips (2) projecting downwardly in the direction of flow, the bottom edge of each tip (2) being substantially parallel to the bottom of the bushing (1), **characterized in that** the cross-section of each tip (2) has the shape of a regular or irregular polygon having between three and eight sides.

2. The bushing (1) as claim 1,
**characterized in that**
the bottom tip plate (13) has a plurality of raised ribs (21) crossing its width, the hollow tips (2) being integrally formed therin and the ribs (21) and tips (2) being substantially parallel to one another and arranged in groups of at least two, each group being set off from every other group along the length of the tip plate (13).

3. The bushing (1) as in claim 1 or 2,
**characterized in that**
the cross-section of each tip (2) has four sides, each tip (2) further being oriented in such a fashion that its diagonals lie parallel to the major and minor axes of the bushing with tips (2) in adjacent rows being staggered with respect to one another.

4. The bushing (1) as in claim 1 or 2,
**characterized in that**
the cross-section of each tip (2) is substantially square, and each tip (2) being oriented in such a fashion that its diagonals lie parallel to the major and minor axes of the bushing with tips in adjacent rows being staggered with respect to one another.

5. The bushing (1) as in any of claims 1 to 4,
**characterized in that**
each tip (2) has a substantially constant wall thickness and the cross-section of each tip (2) is constant.

6. The bushing (1) as in any of claims 1 to 4,
**characterized in that**
each tip (2) is tapered and has walls of decreasing thickness in the direction of the flow.


**Patentansprüche**

1. Düse (1) zur Herstellung von Glasfasern mit Seitenwänden (14a, b, c, d), einer offenen Oberseite und einer Bodenplatte (13) mit Düsenspitzen, die weiterhin eine Vielzahl von hohlen Spitzen (2) aufweist, darauf angeordnet in Gruppen von parallelen Reihen, um den Strom geschmolzenen Glases aufzunehmen, wobei sich die Spitzen (2) nach unten in Richtung des Flusses erstrecken und die Bodenkante jeder Spitze (2) im wesentlichen parallel zum Boden der Düse (1) verläuft,
**dadurch gekennzeichnet,**
daß der Querschnitt jeder Spitze (2) die Form eines gleichmäßigen oder ungleichmäßigen Vieleckes mit zwischen drei und acht Seiten aufweist.

2. Düse (1) nach Anspruch 1,
**dadurch gekennzeichnet,**
daß die Bodenplatte (13) mit Düsenspitzen eine Vielzahl von sich erhebenden Rippen (21), die sich über die Breite erstrecken, aufweist, die hohlen Spitzen (2) integral darin ausgebildet sind und die Rippen (21) und die Spitzen (2) im wesentlichen parallel zueinander und in Gruppen von mindestens zwei angeordnet sind, wobei jede Gruppe gegenüber jeder anderen Gruppe über die Länge der Platte (13) mit Düsenspitzen versetzt ist.

3. Düse (1) nach Anspruch 1 oder 2,
**dadurch gekennzeichnet,**
daß der Querschnitt jeder Spitze (2) vier Seiten aufweist, weiterhin jede Spitze (2) in einer solchen Weise ausgerichtet ist, daß ihre Diagonalen parallel zur Hauptachse und Nebenachse der Düse verlaufen, und die Spitzen (2) in benachbarten Reihen gegeneinander versetzt sind.

4. Düse (1) nach Anspruch 1 oder 2,
**dadurch gekennzeichnet,**
daß der Querschnitt jeder Spitze (2) im wesentlich quadratisch ist und jede Spitze (2) in einer solchen Weise ausgerichtet ist, daß ihre Diagonalen parallel zur Hauptachse und Nebenachse der Düse verlaufen, und die Spitzen in benachbarten Reihen gegeneinander versetzt sind.

**5.** Düse (1) nach einem der Ansprüche 1 bis 4,
**dadurch gekennzeichnet,**
daß jede Spitze (2) eine im wesentlichen konstante Wanddicke aufweist und der Querschnitt jeder Spitze (2) konstant ist.

**6.** Düse (1) nach einem der Anpsrüche 1 bis 4,
**dadurch gekennzeichnet,**
daß jede Spitze (2) verjüngt ist und Wände mit sich in Fließrichtung verringernder Dicke aufweist.

## Revendications

**1.** Filière (1) destinée à la production de fibres de verre, qui comprend des parois latérales (14a, b, c, d), un sommet ouvert et une plaque de tétons de fond (13), qui comporte une multiplicté de tétons creux (2), qui y sont agencés en groupes de rangées parallèles pour s' adapter à l'écoulement d'un verre fondu, les tétons (2) précités faisant saillie vers le bas dans la direction de l'écoulement, le bord inférieur de chaque téton (2) étant sensiblement parallèle au fond de la filière (1),
caractérisé en ce que
la section transversale de chaque téton (2) a la forme d'un polygone régulier ou irrégulier comportant de trois à huit côtés.

**2.** Filière (1) suivant la revendication 1,
caractérisée en ce que
la plaque de tétons de fond (13) comporte une multiplicité de nervures ou côtes dressées (21) en travers de sa largeur, les tétons creux (2) y étant venus de matière et les nervures ou côtes (21) et les tétons (2) étant sensiblement mutuellement parallèles et agencés en groupes d'au moins deux, chaque groupe étant décalé de tout autre groupe le long de la longueur de la plaque de tétons (13).

**3.** Filière (1) suivant la revendication 1 ou 2,
caractérisée en ce que
la section transversale de chaque téton (2) comporte quatre côtés, chaque téton (2) étant, en outre, orienté en une manière telle que ses diagonales soient parallèles aux axes majeur et mineur de la filière, les tétons (2) dans des rangées voisines étant mutuellement décalés.

**4.** Filière (1) suivant la revendication 1 ou 2,
caractérisée en ce que
la section transversale de chaque téton (2) est sensiblement carrée, chaque téton (2) étant orienté en une maniére telle que ses diagonales soient parallèles aux axes majeur et mineur de la filière, les tétons dans des rangées voisines étant mutuellement décalés.

**5.** Filière (1) suivant l'une quelconque des revendications 1 à 4,
caractérisée en ce que
chaque téton (2) possède une épaisseur de paroi sensiblement constante et la section transversale de chaque téton (2) est constante.

**6.** Filière (1) suivant l'une quelconque des revendications 1 à 4,
caractérisée en ce que
chaque téton (2) va en se rétrécissant et possède des parois d'épaisseur décroissante dans la direction de l'écoulement.

FIG. 2

(PRIOR ART)

FIG. 1

(PRIOR ART)

FIG. 4

FIG. 3

FIG. 5

FIG. 6

FIG. 7

FIG. 8

FIG. 9

F I G. 10

F I G. 12

F I G. 11

F I G. 13

F I G. 14